# EUROPÄISCHE PATENTSCHRIFT

(11) **EP 3 285 948 B1**
(45) Veröffentlichungstag und Bekanntmachung des Hinweises auf die Patenterteilung: **12.10.2022**
(21) Anmeldenummer: 16717934.0
(22) Anmeldetag: 21.04.2016
(51) Int. Cl.: B23C 5/28, B23D 77/00, B23Q 11/10

(54) **DREHWERKZEUG MIT SICH VERJÜNGENDEM KÜHLMITTELKANAL SOWIE VERSETZT ANGEORDNETEN KÜHLMITTELAUSTRITTSLEITUNGEN UND DIESBEZÜGLICHES HERSTELLVERFAHREN**
LATHE TOOL COMPRISING A TAPERED COOLANT CHANNEL AND OFFSET COOLANT OUTLET LINES AND CORRESPONDING PRODUCTION METHOD
OUTIL ROTATIF À CONDUIT D'AGENT DE REFROIDISSEMENT CONIQUE ET CONDUITS DE SORTIE D'AGENT DE REFROIDISSEMENT DISPOSÉS DE FAÇON DÉCALÉE ET PROCÉDÉ DE FABRICATION DE CEUX-CI

(30) Priorität: 24.04.2015 DE 102015106374
(43) Veröffentlichungstag der Anmeldung: 28.02.2018
(73) Patentinhaber: Gühring KG, 72458 Albstadt (DE)
(72) Erfinder: BRUNNER, Michael, 72458 Albstadt (DE)
(74) Vertreter: Gleim, Christian Ragnar
(86) Internationale Anmeldenummer: PCT/EP2016/058914
(87) Internationale Veröffentlichungsnummer: WO 2016/170066

(56) Entgegenhaltungen:
- EP-A2- 2 140 960
- WO-A1-98/55254
- WO-A1-2014/186812
- DE-A1-102009 029 715
- FR-A3- 2 927 556
- JP-A- 2004 167 617
- US-A- 3 040 605
- US-A- 3 293 727
- US-A1- 2005 084 351

## Beschreibung

Die Erfindung betrifft ein Drehwerkzeug für eine spanende Bearbeitung von Werkstücken, das einen Grundkörper mit einem Einspannabschnitt und einem Werkzeugkopf umfasst, der einen zumindest eine Spankante aufweisenden Spanbereich aufweist. Der Werkzeugkopf umfasst zumindest einen sich verjüngenden Kühlmittelkanal und zumindest zwei versetzt angeordnete Kühlmittelaustrittsleitungen zur Zuführung eines Kühl- und/oder Schmierfluides in den Spanbereich. Ein derartiges Drehwerkzeug gemäß dem Oberbegriff des Anspruchs 1 ist aus dem Dokument US 2005/084351 A1 bekannt.

Des Weiteren betrifft die Erfindung ein Verfahren zur Herstellung eines diesbezüglichen Drehwerkzeugs.

### STAND DER TECHNIK

Aus dem Stand der Technik ist eine Vielzahl von Drehwerkzeugen bekannt, die einen Grundkörper mit einem Spannabschnitt und einem Werkzeugkopf aufweisen. Der Einspannabschnitt kann eine Einspannschaft oder eine besonders geformter axialer Endbereich des Drehwerkzeugs sein, der für die Aufnahme in eine spezielle Einspannvorrichtung, wie einer HSK-Spannvorrichtung, ausgebildet ist. Derartige Drehwerkzeuge können Bohr-, Reib-, Fräs- oder Polierwerkzeuge sein. In der Regel weisen derartige Drehwerkzeuge im Werkzeugkopf zumindest eine Spankante auf, durch die in einem spanabhebenden Arbeitsgang Material von einem Werkstück entfernt wird. Insbesondere bei Hochleistungsdrehwerkzeugen, beispielsweise HPC- (High Performance Cutting) oder HSC- (High Speed Cutting) Drehwerkzeugen, sind im Drehwerkzeug ein oder mehrere Kühlmittelkanäle vorgesehen, um ein Kühl- und/oder Schmierfluid in den Bereich des Werkzeugkopfs einzubringen, um den Werkzeugkopf und die umfasste Spankante zu kühlen und Materialabtrag aus dem Spanbereich abzuführen.

Aus der EP 0 674 560 B1, der DE 197 19 892 A1 sowie der DE 20 2005 020 829 U1 sind Drehwerkzeuge bekannt, die einen Kühlmittelkanal aufweisen, welcher in Längsachse des Drehwerkzeugs angeordnet ist und im Bereich des Werkzeugkopfes eine oder mehrere Kühlmittelaustrittsleitungen aufweisen kann. Der Kühlmittelkanal weißt einen über die Länge konstanten Querschnitt auf und verläuft bevorzugt zentrische im Werkzeug.

Die DE 20 2012 103 752 U1 offenbart ein Fräswerkzeug mit mindestens einem Kühlmittelkanal, wobei der Fräsdurchmesser kleiner als der Einspanndurchmesser ist. Bevorzugt umfasst das Fräswerkzeug mehrere parallel verlaufende Kühlmittelkanäle, welche in Längsrichtung des Einspannabschnitts verlaufen. Die Austrittsöffnungen der Kühlmittelkanäle liegen im Übergangsbereich zwischen Fräs- und Einspannabschnitt. Diese Ausführung eignet sich speziell für Drehwerkzeuge mit kleinem Durchmesser, d.h. für Durchmesser zwischen 0,05 mm und 4 mm.

Aus der DE 10 2009 029 715 A1 ist ein Werkzeug zur Bearbeitung von Werkstücken bekannt, welches teils aus einem verschließfesten und teils aus einem zähen Werkstoff besteht. Das Werkzeug kann einen Kühlmittelkanal enthalten, welcher mindestens eine Kühlmittelaustrittsleitung im Bereich des Spanbereichs aufweist. Die Kühlmittelaustrittsleitungen können in verschiedenen Ebenen am Kühlmittelkanal angeordnet sein.

Die DE 201 01 101 U1 offenbart ein Werkzeug für die Feinbearbeitung von Bohrungen, welches einen zentralen Kühlmittelkanal und radial verlaufende Kühlmittelaustrittsleitungen aufweisen kann. Ist das Werkzeug mit mehreren Schneidscheiben ausgestattet, so verlaufen in jeder Schneidscheibe Kühlmittelaustrittsleitungen, die somit in Längsrichtung zur Werkzeugachse versetzt angeordnet sind.

Die DE 20 2006 007 085 U1 offenbart ein Drehwerkzeug mit zentral angeordnetem Kühlkanal. Der Kühlkanal weist einzeln angeordnete Kühlmittelaustrittsleitungen auf, die in Richtung Einspannabschnitt des Drehwerkzeugs geneigt sein können. Der zentral angeordnete Kühlkanal hat im Bereich dieser Kühlmittelaustrittsleitungen einen geringeren und konstanten Querschnitt als im Bereich des Einspannabschnitts, wobei der Querschnitts-Übergangsbereich als Stufe ausgebildet ist. Der Kühlkanal ist im Bereich der Kühlmittelaustrittsleitungen mit einem konstanten Querschnitt ausgebildet.

In der gattungsgemäßen WO 03/024661 A1 kann ein Kühlmittelkanal im Bereich des Einspannabschnitts eine parabolische Form aufweisen und mit einem sich verjüngenden Querschnitt ausgebildet sein. Im Bereich von Kühlmittelaustrittsleitungen weist der Kühlmittelkanal einen konstanten Querschnitt auf.

Die DE 10 2004 055 377 A1 offenbart ein Drehwerkzeug mit einer im Innern des Drehwerkzeugs angebrachten Kühlmittel-Verteilereinrichtung. Die Verteilereinrichtung stellt ein separates Bauteil dar und teilt das Kühlmittel in Teilströme mit definiertem Volumenstrom auf. Den Schneiden des Drehwerkzeugs kann so gezielt eine bestimmte Menge an Kühlmittel zugeführt werden. Dies kann durch Bohrungen realisiert werden kann. Die Bohrungen sind in einer Ebene angeordnet.

In der US 2007/0053755 A1 ist ein Drehwerkzeug mit einem Kühlkanal offenbar. Der Kühlkanal weist einen sich verminderten Querschnitt auf, wobei der größte Querschnitt am Einspannenden des Drehwerkzeugs angeordnet ist.

Die gattungsgemäße DE 103 17 567 A1 lehrt ein allgemeines Verfahren zur Herstellung von Bohrwerkzeugen mit doppelhelixartig-verlaufenden Kühlkanälen. Weiterhin offenbart die gattungsgemäße DE 36 01 385 A1 ein allgemeines Verfahren zur Herstellung von Sinterkörpern.

Die US 3 293 727 A zeigt ein Schneidwerkzeug mit axial angeordnetem Kühlmittelkanal, wobei der Kühlmittelkanal am obersten Ende spitz zuläuft und in diesem Bereich Kühlmittelaustrittsleitungen aufweist. Die Kühlmittelaustrittsleitungen liegen in diesem spitz zulaufenden Bereich sowie in dem Bereich des Kühlkanals mit konstantem Querschnitt.

In der EP 2 140 960 A2 wird ein Bohrwerkzeug offenbart, das einen Spänesauger zum Absaugen der beim Bohrvorgang anfallenden Späne aufweist. Dieser Spänesauger besteht aus einer Hauptleitung, die zentral im Bohrwerkzeugquerschnitt angeordnet ist und an der Spitze zulaufend ausgebildet ist, sowie mehreren Teilleitungen, die von der Hauptleitung in diesem zugespitzten Bereich abgehen. Diese Teilleitungen können in Längsrichtung des Bohrwerkzeugs versetzt in diesem zugespitzten Bereich abgehen.

Die US 2005/084351 A1 zeigt ein Bohr- oder Fräswerkzeug mit einem Hohlraum, sodass eine materialsparende Herstellung gewährleistet werden kann. Dieser Hohlraum befindet sich teilweise im Einspannabschnitt und teilweise im Werkzeugkopf und ist im Werkzeugkopf an die Außengeometrie des Werkzeugs angepasst. Der Hohlraum weist im Bereich des Werkzeugkopfes einen nicht kreisrunden Querschnitt auf und kann dem Querschnitt der Spankanäle folgen. Der Hohlraum verläuft spiralförmig um die Rotationsachse und greift in den Werkzeugkopf ein, wobei die Form des Hohlraums durch die Form des Werkzeugs bestimmt wird.

In der FR 2 927 556 A3 ist eine Kontrolleinrichtung für eine Kühlmittelzufuhr in ein Werkzeug offenbart, wobei das Werkzeug einen Hauptkanal mit konstantem Querschnitt und mindestens einen davon abzweigende Kühlmittelaustrittsleitung aufweist.

Die WO 98/55254 A1 zeigt einen Werkzeughalter für Schneidplatten, wobei im Bereich der Schneidplatte eine Kühlmitteldüse mit einem Zufluss installiert werden kann. Dabei kann die Ausführung der Düse an die Erfordernisse der Drehbearbeitung angepasst werden. Innerhalb dieser Düse kann die Kühlmittelzuführung durch einen konisch zulaufenden Kanal durch die Düse bis zum Austritt aus der Düse geleitet werden.

Im Bereich der Bearbeitung von Aluminium und Weichmetallwerkstoffen, die einen höheren Siliziumgehalt aufweisen, kommt es zu einem hohen Verschleiß eines Drehwerkzeugs aufgrund der Zähigkeit des zu bearbeitenden Werkstücks. Hierdurch werden insbesondere Flächen im Werkzeugkopf eines Drehwerkzeugs mechanisch wie thermisch strapaziert, wodurch diese nach längerer Benutzung des Drehwerkzeugs ausdünnen und verschleißen. Hierdurch besteht die Gefahr, dass die mechanische Stabilität des Drehwerkzeugs, die Schmierfähigkeit und die Lebensdauer eingeschränkt werden.

Aufgabe der Erfindung ist es daher, ein Drehwerkzeug und ein Herstellverfahren vorzuschlagen, das durch eine verbesserte Kühlung einen dauerhaften Einsatz und eine hohe Bearbeitungsqualität, insbesondere bei Aluminiumwerkstoffen mit hohem Siliziumgehalt und anderen weichmetallischen und zähen Werkstoffen ermöglicht.

Diese Aufgabe wird durch ein Drehwerkzeug und ein Herstellverfahren nach den unabhängigen Ansprüchen 1 bzw. 10 gelöst. Vorteilhafte Weiterentwicklungen der Erfindung sind Gegenstand der Unteransprüche.

### OFFENBARUNG DER ERFINDUNG

Gegenstand der Erfindung ist ein Drehwerkzeug für eine spanende Bearbeitung von Werkstücken, umfassend einen Grundkörper mit einen Einspannabschnitt sowie einem Werkzeugkopf, der einen zumindest eine Spankante aufweisenden Spanbereich umfasst, wobei der Werkzeugkopf zumindest einem Kühlmittelkanal zur Zuführung eines Kühl- und/oder Schmierfluides in den Spanbereich umfasst. Es wird vorgeschlagen, dass der Kühlmittelkanal einen sich verjüngenden Querschnitt in Richtung des Spanbereichs des Werkzeugkopfes im Werkzeugkopf aufweist und in diesem Bereich zumindest zwei von Kontaktstellen des Kühlmittelkanals in Richtung Werkzeugkopfoberfläche abzweigende Kühlmittelaustrittsleitungen im Bereich des Werkzeugkopfes angeordnet sind, wobei die mindestens zwei Kühlmittelaustrittsleitungen an in axialer Längsrichtung des Kühlmittelkanals versetzten Positionen angeordnet sind. Der Kühlmittelkanal ist über die komplette Länge des Drehwerkzeugs verjüngt ausgebildet.

Durch die in Längsrichtung des Kühlmittelkanals versetzt angeordneten Kühlmittelaustrittsleitungen wird Schmier- und/oder Kühlfluid kontinuierlich aus dem Kühlmittelkanal abgeführt. Bei mehreren versetzt angeordneten Kühlmittelaustrittsleitungen sinkt somit in Abhängigkeit der Menge des durch die jeweilige Kühlmittelaustrittsleitung abgeführten Schmier- und/oder Kühlfluides der statische Druck im Kühlmittelkanal. Durch den Druckabfall verringert sich ebenso die Fließgeschwindigkeit und somit die Durchflussmenge. Die am nahsten am Spanbereich des Werkzeugkopfes, d.h. an der Werkzeugspitze, angeordnete Kühlmittelaustrittsleitung erhält somit am wenigsten Schmier- und/oder Kühlfluid, wobei an die ser Stelle die Temperaturerhöhung während der Bearbeitung mit dem Drehwerkzeug am größten ist. Um dies zu unterbinden, ist erfindungsgemäß angestrebt die Durchflussmenge durch den Kühlmittelkanal zumindest in dem Bereich, in dem Kühlmittelaustrittsleitungen angebracht sind, konstant zu halten, obwohl Schmier- und/oder Kühlfluid durch die Kühlmittelaustrittsleitungen abgeführt wird.

Durch einen sich verjüngenden Querschnitt des Kühlmittelkanals in Richtung des Spanbereichs des Werkzeugkopfs wird der Druck des Schmier- und/oder Kühlfluides im Bereich des Werkzeugkopfes kontinuierlich erhöht und somit in diesem Bereich die Durchflussmenge im Kühlmittelkanal kontinuierlich gesteigert werden. Durch die Abführung von Schmier- oder Kühlfluid durch die Kühlmittelaustrittsleitungen kann diese Steigerung der Durchflussmenge wieder ausgeglichen werden. Die Querschnittsänderung des Kühlmittelkanals kann exakt an die Menge des durch die Kühlmittelaustrittsleitungen abgeführten Schmier- und/oder Kühlfluides angepasst werden, sodass der Druck und damit die Durchflussmenge im Kühlmittelkanal konstant gehalten werden kann. In alle Kühlmittelaustrittsleitungen kann demzufolge die gleiche Menge an Schmier- und/oder Kühlfluid mit gleichem Druck und damit gleicher Durchflussmenge eingespeist werden.

In einem weiteren Aspekt kann Gewicht und Material bei einer erfindungsgemäßen Ausführung eines Drehwerkzeuges eingespart werden.

Bei einer Ausführungsform mit verjüngtem Querschnitt des Kühlmittelkanals in Richtung des Werkstoffkopfes ist im Einspannabschnitt im Vergleich zum Werkzeugkopf weniger Material vorhanden. Im Betrieb erreicht das Drehwerkzeug im Bereich des Werkzeugkopfes eine höhere Temperatur als im Bereich des Einspannabschnittes.

Aus einem großen Temperaturgradienten innerhalb des Drehwerkzeuges resultieren höhere mechanische Verspannungen und ein geometrischer Verzug. Durch eine Verringerung dieses Temperaturgradienten können Spannungen reduziert und ein Verzug des Drehwerkzeuges minimiert werden. Ist die Materialverteilung im Drehwerkzeug umgekehrt proportional zur Temperaturverteilung, wie in der vorliegenden Erfindung angestrebt, so kann der Temperaturgradient innerhalb des Drehwerkzeuges minimiert werden.

Der Kühlmittelkanals kann beispielsweise einen kreisförmigen, teilkreisförmigen, elliptischen, trapezförmigen, dreiecksförmigen, quadratischen oder rechteckigen Querschnitt aufweisen. Hierbei kann sich die Querschnittsform auch über die Länge des Kühlkanals in ihrer grundlegenden Form graduell ändern oder Querschnittssprünge aufweisen.

In einer vorteilhaften Ausführungsform können die Kühlmittelaustrittsleitungen in Umfangsrichtung des Kühlmittelkanals versetzt angeordnet sein. Hierbei können die Kontaktstellen der Kühlmittelaustrittsleitungen in radialer Richtung oder in Längsrichtung des Kühlmittelkanals versetzt hintereinander angeordnet sein. Ebenso können beide Anordnungen kombiniert werden. Bei in radialer Richtung versetzter Anordnung können die Kontaktstellen der Kühlmittelaustrittsleitungen Zickzack-förmig um den Umfang des Kühlmittelkanals platziert werden. Durch eine radiale Versetzung können alle Umfangsbereiche des Werkzeugkopfs gleichmäßig gekühlt werden.

In einer weiteren vorteilhaften Ausführungsform können die Kontaktstellen der Kühlmittelaustrittsleitungen mit dem Kühlmittelkanal spiralartig um den Kühlmittelkanal angeordnet sein. Hierbei kann die Spiralform auch mehrmals den Umfang des Kühlmittelkanals umlaufen. Die Kontaktstellen der Kühlmittelaustrittsleitungen mit dem Kühlmittelkanal können somit spiralartig in Umfangsrichtung um den Kühlmittelkanal und hintereinander versetzt in Längsrichtung des Kühlmittelkanals angeordnet sein. Hierbei können alle Kühlmittelaustrittsleitungen bis zur gleichen Ebene an der Werkzeugkopfoberfläche geführt werden oder stufenartig in versetzten Ebenen aus dem Werkzeugkopf an die Oberfläche geführt werden. Es wird ein maximal großer Abstand der Austrittsleitungen ermöglicht, so dass eine Schwächung der Werkzeugwand verringert wird.

Es bietet sich vorzugsweise an, dass der Kühlmittelkanal im Bereich des Grundkörpers einen größeren Querschnitt aufweist als im Bereich des Werkzeugkopfes. Durch einen sich verjüngenden Querschnitt des Kühlmittelkanals in Richtung des Spanbereichs des Werkzeugkopfes in zumindest dem Bereich, in dem Kühlmittelaustrittsleitungen abgehen, wird der Druck des Schmier- und/oder Kühlfluides im Bereich des Werkzeugkopfes kontinuierlich erhöht. Im Bereich des Kühlmittelkanals kann somit der Druck des Schmier- und/oder Kühlfluides erhöht und die Durchflussmenge kontinuierlich gesteigert werden, so dass eine verbesserte Kühlwirkung des Werkzeugkopfes gewährleistet ist.

In einer weiteren Ausführungsform kann der komplette Verlauf des Kühlmittelkanals eine elliptische und/oder parabolische Form ausbilden. Der Kühlmittelkanal kann hierbei vom Einspannabschnitt über den Werkzeugkopf und wieder zurück zum Einspannabschnitt verlaufen. Der Verlauf des Kühlmittelkanals kann hierbei einer Ellipsen- und/oder Parabelform folgen. Ebenso können zwei oder mehrere Kühlmittelkanäle vom Einspannabschnitt in den Werkzeugkopf und wieder zurück zum Einspannabschnitt verlaufen. Die sich daraus insgesamt ausbildenden Kühlmittelkanäle können sich an einem Punkt im Bereich des Werkzeugkopfes schneiden und von diesem Schnittpunkt in mehrere zueinander abgewinkelte liegenden Orientierungen in Richtung des Einspannabschnittes verlaufen.

In einer vorteilhaften Ausführungsform kann der Kühlmittelkanal zumindest zwei Abschnitte, insbesondere drei Abschnitte umfassen, welche jeweils einen unterschiedlichen Neigungswinkel α1, α2 oder Krümmungsverlauf zwischen den Abschnittsseitenwänden des Kühlmittelkanals und der Rotationsachse des Drehwerkzeugs aufweisen. Die Drucksteigerung des Kühl- und/oder Schmierfluides innerhalb des Drehwerkzeugs kann somit an spezielle Anforderungen individuell angepasst werden. Im Falle von α = 90° besteht der Abschnitt des Kühlmittelkanals lediglich aus dem Querschnittssprung von einem Abschnitt mit kleinerem Querschnitt zu einem Abschnitt mit größerem Querschnitt oder umgekehrt.

Gemäß der Erfindung ist der Kühlmittelkanal über die komplette Länge des Drehwerkzeugs verjüngt ausgebildet. Die Druckverteilung des Kühl- und/oder Schmierfluides wird somit kontinuierlich vom Einspannabschnitt über den Werkzeugkopf bis zur Werkzeugkopfoberfläche gesteigert.

Der kleinere Querschnitt des sich so einstellende konischen Kühlmittelkanals ist im Bereich des Werkzeugkopfes angeordnet.

In einer bevorzugten Ausführungsform kann der Kühlmittelkanal zentrisch im Grundkörper verlaufen. Für das Drehwerkzeug kann so eine optimale Drehdynamik erreicht werden und das Material des Einspannabschnittes kann somit optimal gekühlt werden. Der Kühlmittelkanal im Grundkörper kann sich im Bereich des Werkzeugkopfes auch in mehrere einzelne Kühlmittelaustrittsleitungen aufspalten. Diese können beispielsweise den Verwindungen des Werkzeugkopfes folgen. Durch die Kühlmittelaustrittsleitungen kann jede Spankante optimal gekühlt werden. Die anfallenden Späne werden ebenso durch den Austritt des Schmier- und/oder Kühlfluides an der Werkzeugkopfoberfläche optimal abgeleitet.

In einer bevorzugten Ausführungsform kann der Kühlmittelkanal zentrisch im Werkzeugkopf verlaufen. Hierbei kann das Schmier- und/oder Kühlfluid auch über eine Mehrzahl von Kühlmittelkanälen im Grundkörper in den Kühlmittelkanal im Werkzeugkopf eingespeist werden. Für das Drehwerkzeug kann so eine optimale Drehdynamik erreicht werden und das Material des Werkzeugkopfes kann somit optimal gekühlt werden. Der Kühlmittelkanal im Werkzeugkopf kann sich im Bereich des Einspannabschnittes auch in mehrere einzelne Kühlmittelkanäle aufspalten, welche beispielsweise parallel durch den Einspannabschnitt verlaufen. Im Bereich des Werkzeugkopfes kann sich der zentrisch angeordnete Kühlmittelkanal in mehrere Kühlmittelaustrittsleitungen aufspalten.

In einer bevorzugten Ausführungsform kann der Kühlmittelkanal im Werkzeugkopf im Bereich des Spanbereichs zumindest eine, bevorzugt zumindest zwei Kühlmittelaustrittsleitungen umfassen. Die Kühlmittelaustrittsleitungen können geradlinig, abgewinkelt, gebogen oder verdreht ausgebildet sein, und können den Verwindungen des Drehwerkzeugs folgen. Vorteilhafterweise ist der Kühlmittelkanal im Bereich der Kontaktstellen der Kühlmittelaustrittsleitungen mit dem Kühlmittelkanal verjüngt ausgebildet. Durch die Abführung von Schmier- und/oder Kühlfluid durch die Kühlmittelaustrittsleitungen kann die Steigerung der Durchflussmenge wieder ausgeglichen werden. Die Querschnittsänderung des Kühlkanals kann exakt an die Menge des durch die Kühlmittelaustrittsleitungen abgeführten Schmier- und/oder Kühlfluides angepasst werden, so dass der Druck und damit die Durchflussmenge im Kühlkanal konstant gehalten werden können. In alle Kühlmittelaustrittsleitungen kann demzufolge die gleiche Menge an Schmier- und/oder Kühlfluid mit gleichem Druck und damit gleicher Durchflussmenge eingespeist werden wie im Kühlmittelkanal selbst.

In einer vorteilhaften Ausführungsform kann die Anzahl der Kühlmittelaustrittsleitungen der Anzahl der Spankanten des Werkzeugkopfes entsprechen. Auf diese Weise kann jede Spankante des Werkzeugkopfes gezielt einzeln gekühlt werden. Ebenso können die Späne an jeder Spankante durch das Kühl- und/oder Schmierfluid gezielt abgeführt werden.

Gegenstand der Erfindung ist weiterhin ein Verfahren zur Herstellung eines erfindungsgemäßen Drehwerkzeugs. Das Verfahren ist dadurch gekennzeichnet, dass die Herstellung des Rohlings des Drehwerkzeugs durch ein Sinterverfahren, bei dem der Rohling durch Pressen unter hohem Druck eines feinkörnigen Metallpulvers, erfolgt, bei dem der Kühlmittelkanal des Drehwerkzeugs integral im Sinterverfahren mit ausgebildet wird. Mit diesem Verfahren kann jede beliebige Form und Ausführung des Kühlmittelkanals problemlos hergestellt werden. Hierzu wird eine Positivform des Kühlkanals als innerer Kern des Rohlings eingesetzt.

In einer weiteren Ausführungsform des Verfahrens zur Herstellung des erfindungsgemäßen Drehwerkzeugs können bei der Herstellung des Rohlings die Kühlmittelaustrittsleitungen des Drehwerkzeugs integral im Sinterverfahren mit ausgebildet werden. Ein innerer Positivkern des Kühlkanals kann vorzugsweise mehrteilige Kühlkanalaustrittsleitungen umfassen, die nach dem Sinterverfahren aus dem Rohling entnommen werden können. Der bzw. die Kerne der Kühlkanalaustrittsleitungen können vorzugsweise in den Kern des Kühlkanals eingesteckt werden. Das komplette Kühlmittelkanalsystem kann somit während des Sinterverfahrens hergestellt werden.

Die im Zusammenhang mit der erfindungsgemäßen Vorrichtung und dem erfindungsgemäßen innengekühlten Drehwerkzeug und deren jeweiligen vorteilhaften Ausführungsformen und Ausgestaltungen aufgezeigten Vorteile und Merkmale gelten für das erfindungsgemäße Verfahren und dessen vorteilhafte Ausführungsformen entsprechend und umgekehrt.

### ZEICHNUNGEN

Weitere Vorteile ergeben sich aus der vorliegenden Zeichnungen und Zeichnungsbeschreibungen. In den Zeichnungen sind Ausführungsbeispiele der Erfindung dargestellt. Die Zeichnung, die Beschreibung und die Ansprüche enthalten zahlreiche Merkmale in Kombination.

Es zeigt:
- **Fig. 1**: eine Außenansicht eines Drehwerkzeugs mit einem Grundkörper und einem Werkzeugkopf eines Ausführungsbeispiels eines erfindungsgemäßen Drehwerkzeugs mit Kühlmittelkanal;
- **Fig. 2**: eine schematische Darstellung eines Längsschnittes durch ein Ausführung eines erfindungsgemäßen Drehwerkzeugs mit konischen Kühlmittelkanal;
- **Fig. 3**: eine schematische Darstellung eines Längsschnittes durch eine Ausführung eines Drehwerkzeugs mit elliptischem Kühlmittelkanal, das nicht unter den Gegenstand des Schutzbegehrens fällt;
- **Fig. 4**: eine schematische Darstellung eines Längsschnittes durch eine Ausführung eines Drehwerkzeugs mit zweigeteiltem Kühlmittelkanal, das nicht unter den Gegenstand des Schutzbegehrens fällt, umfassend einen sich verjüngenden und einen konstanten Querschnitt des Kühlmittelkanals;
- **Fig. 5**: eine schematische Darstellung eines Längsschnittes durch ein Ausführung eines erfindungsgemäßen Drehwerkzeugs mit konischem Kühlmittelkanal mit zwei Kühlmittelkanal-Abschnitten mit unterschiedlichen Neigungswinkeln α1 und α2;
- **Fig. 6**: eine Darstellung eines Längsschnittes durch eine Ausführung eines erfindungsgemäßen Drehwerkzeugs mit konischem Kühlmittelkanal;
- **Fig. 7**: eine perspektivische Darstellung eines Ausschnittes eines Werkzeugkopfes nach Fig. 6 mit Kühlmittelaustrittsleitungen;
- **Fig. 8**: eine Darstellung eines Längsschnittes durch einen Werkzeugkopf nach Fig. 7 mit Kühlmittelkanal und Kühlmittelaustrittsleitungen;
- **Fig. 9**: eine perspektivische Darstellung eines Kühlmittelkanals mit spiralförmig angeordneten Kühlmittelaustrittsleitungen, Darstellung ohne Drehwerkzeug.
- **Fig. 10**: eine Darstellung eines Längsschnittes durch einen Werkzeugkopf mit Kühlmittelkanal und Kühlmittelaustrittsleitungen;

In den Figuren sind gleiche oder gleichartige Komponenten mit gleichen Bezugszeichen beziffert.

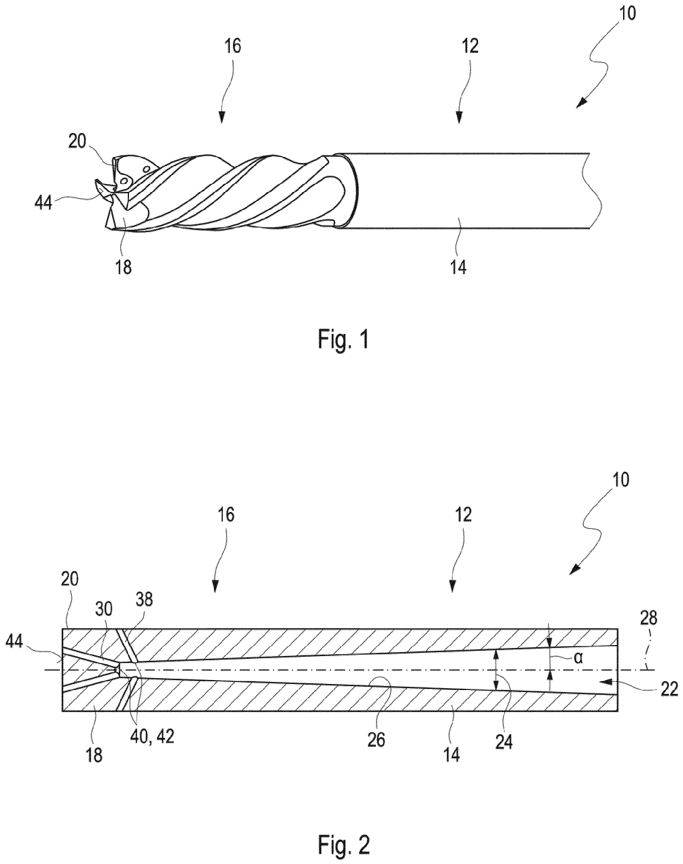

Fig. 1 zeigt eine Außenansicht einer erfindungsgemäßen Ausführung eines Drehwerkzeugs, bestehend aus einem Grundkörper 12 mit Einspannabschnitt 14 und einem Werkzeugkopf 16 mit Spanbereich 18. Am Werkzeugkopf 16 im Spanbereich 18 sind an der Werkzeugkopfoberfläche 44 mehrere Spankanten 20 angeordnet. Der Grundkörper 12 mit Einspannabschnitt 14 dient zur Einspannung in einem Spannfutter (nicht gezeigt). Das Drehwerkzeug 10 kann beispielsweise aus einem Chrom-Vanadium-Stahl (CV-Stahl) oder aus Hartmetall hergestellt werden. Zur Erhöhung der Lebensdauer und der Funktionseigenschaften eines Drehwerkzeugs wird in der Regel der Werkzeugkopf 16 gehärtet, um die mechanische Widerstandsfähigkeit zu erhöhen. Dies erfolgt durch eine Änderung oder Umwandlung des Metallgefüges des Werkzeugkopfes 16, wobei dies durch eine Wärmebehandlung mit einer anschließenden schnellen Abkühlung bewirkt wird. Üblicherweise wird hierbei der gesamte Werkzeugkopf 16 gehärtet, um die gewünschte Widerstandsfähigkeit zu erreichen. Ebenso kann der Werkzeugkopf 16 mit einer verschleißfesten Beschichtung versehen werden.

Fig. 2 zeigt eine schematische Darstellung eines Längsschnittes durch eine Ausführung eines erfindungsgemäßen Drehwerkzeugs 10 mit konischem Kühlmittelkanal 22. Der Kühlmittelkanal 22 verläuft vom Grundkörper 12 mit Einspannabschnitt 14 über den Werkzeugkopf 16 bis zum Spanbereich 18 konisch und zentrisch im Drehwerkzeug 10. Im Bereich des Spanbereichs 18 sind mehrere Kühlmittelaustrittsleitungen 30, 38 angeordnet, welche das Kühl- und/oder Schmierfluid durch den Kühlmittelkanal 22 bis zu den Spankanten 20 befördern. Die Kühlmittelaustrittsleitungen 30, 38 sind über Kontaktstellen 40, 42 mit dem Kühlmittelkanal 22 verbunden. Die Anzahl der Kühlmittelaustrittsleitungen 30, 38 kann der Anzahl der Spankanten 20 des Drehwerkzeugs 10 entsprechen. Hierbei sind die Kühlmittelaustrittsleitungen 30, 38 in unterschiedlichen, in Längsrichtung des Kühlmittelkanals 22 versetzten Positionen 40, 42 angeordnet. Im dargestellten schematischen Längsschnitt sind zwei Kühlmittelaustrittsleitungen 30 am Ende des Kühlmittelkanals 22 und zwei weitere Kühlmittelaustrittsleitungen 38 in Längsrichtung versetzt sichtbar. Der Kühlmittelkanal 22 verläuft zentrisch zur Rotationsachse 28, wobei der Querschnitt 24 des Kühlmittelkanals 22 zum Werkzeugkopf 16 hin abnimmt. Die Abschnittsseitenwand 26 des Kühlmittelkanals 22 weist über die gesamte Länge des Kühlmittelkanals 22 einen konstanten Winkel α zur Rotationsachse 28 auf.

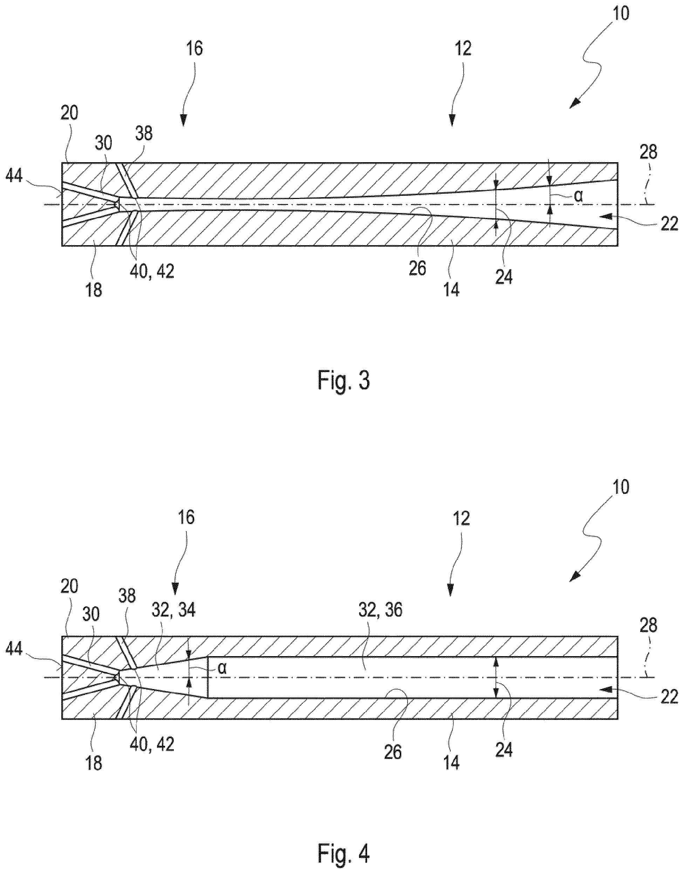

In Fig. 3 ist ebenfalls eine schematische Darstellung eines Längsschnittes durch eine Ausführungsform eines Drehwerkzeugs dargestellt. Der Unterschied zur Fig. 2 liegt in der Ausgestaltung der Abschnittsseitenwand 26 des Kühlmittelkanals 22. In dieser Ausführungsform beschreibt die Abschnittsseitenwand 26 des Kühlmittelkanals 22 eine Parabel- oder Ellipsenform. Somit besteht eine stetige Winkeländerung des Winkels α zwischen der Rotationsachse 28 des Drehwerkzeugs 10 und der Abschnittsseitenwand 26 des Kühlmittelkanals 22. Folglich kann sich der Querschnitt 24 des Kühlmittelkanals 22 vom Einspannabschnitt 14 bis zum Werkzeugkopf 16 verjüngen und anschließend wieder vergrößern.

Fig. 4 zeigt eine schematische Darstellung eines Längsschnittes durch ein Drehwerkzeug 10 mit zweigeteiltem Kühlmittelkanal 22. Der Kühlmittelkanal 22 ist zentrisch zur Rotationsachse 28 im Drehwerkzeug 10 angeordnet. Der zweigeteilte Kühlmittelkanal 22 besteht aus einem konstanten Abschnitt 32, 36 und einen sich verjüngenden Abschnitt 32, 34. Der Querschnitt 24 des Kühlmittelkanals 22 ist im Bereich des konstanten Abschnittes 32, 36 konstant, und nimmt im Bereich des sich verjüngenden Abschnitts 32, 34 hin zur Werkzeugkopfoberfläche 44 ab. Der sich verjüngende Abschnitt 32, 34 befindet sich demnach am Werkzeugkopf 16, an welchem die Kühlmittelaustrittsleitungen 30, 38 angebracht sind. Die Kontaktstellen 40, 42 der Kühlmittelaustrittsleitungen 30 liegen in Bezug zu den Kontaktstellen 40, 42 der Kühlmittelaustrittsleitungen 38 in Längsrichtung versetzt auf dem Kühlmittelkanal 22.

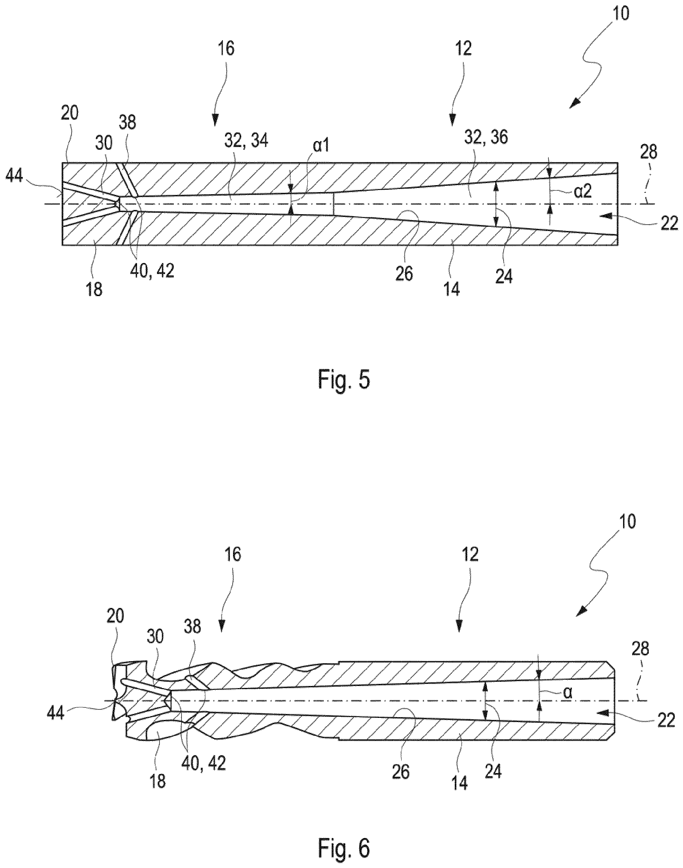

Fig. 5 zeigt eine schematische Darstellung eines Längsschnittes durch eine Ausführungsform eines erfindungsgemäßen Drehwerkzeugs 10 mit konischem Kühlmittelkanal 22, bestehend aus zwei Kühlmittelkanal-Abschnitten 32, 34, 36 mit unterschiedlichen Neigungswinkeln α1, α2. Der Kühlmittelkanal 22 befindet sich zentrisch zur Rotationsachse 28. Die beiden Kühlmittelkanal-Abschnitte 32, 34, 36 haben unterschiedliche Neigungswinkel α1, α2 zwischen der Abschnittsseitenwand 26 des Kühlmittelkanals 22 und der Rotationsachse 28. Hierbei befindet sich der Kühlmittelkanal-Abschnitt 32, 34 mit dem kleineren Winkel α1, wobei α1 < α2, näher am Werkzeugkopf 16. Der Kühlmittelkanal-Abschnitt 32, 36 mit α2, wobei α2 > α1, kann sich über die komplette Länge des Einspannabschnitts 14 des Grundkörpers 12 erstrecken oder auch in den Werkzeugkopf 16 hineinragen. Ebenso ist eine Ausführungsform mit einem Kühlmittelkanal-Abschnitt 32, 36 mit α2 < α1 möglich, wobei demnach der Kühlmittelkanal-Abschnitt 32, 34 mit α1 > α2 näher am Werkzeugkopf 16 liegt.

In Fig. 6 ist ein Längsschnitt durch eine Ausführung eines erfindungsgemäßen Drehwerkzeugs 10 mit konischem Kühlmittelkanal 22 dargestellt. In dieser Ausführungsform ist der Kühlmittelkanal 22 über die komplette Länge konisch ausgebildet, wie in Fig. 2. Der Kühlmittelkanal 22 ist zentrisch im Drehwerkzeug 10 angeordnet und verjüngt sich in Richtung des Werkzeugkopfes 16. Im Bereich des Werkzeugkopfes 16 spaltet sich der Kühlmittelkanal 22 in mehrere Kühlmittelaustrittsleitungen 30 auf, durch welche das Kühl- und/oder Schmierfluid bis in den Spanbereich 16 zu den Spankanten 18 transportiert wird. In einem weiteren Aspekt werden die Späne gezielt durch das Schmier- und/oder Kühlfluid abgeführt. Die Kontaktstellen 40, 42 der Kühlmittelaustrittsleitungen 30, 38 mit dem Kühlmittelkanal 22 können sich auch näher am Einspannabschnitt 14 des Drehwerkzeugs 10 befinden.

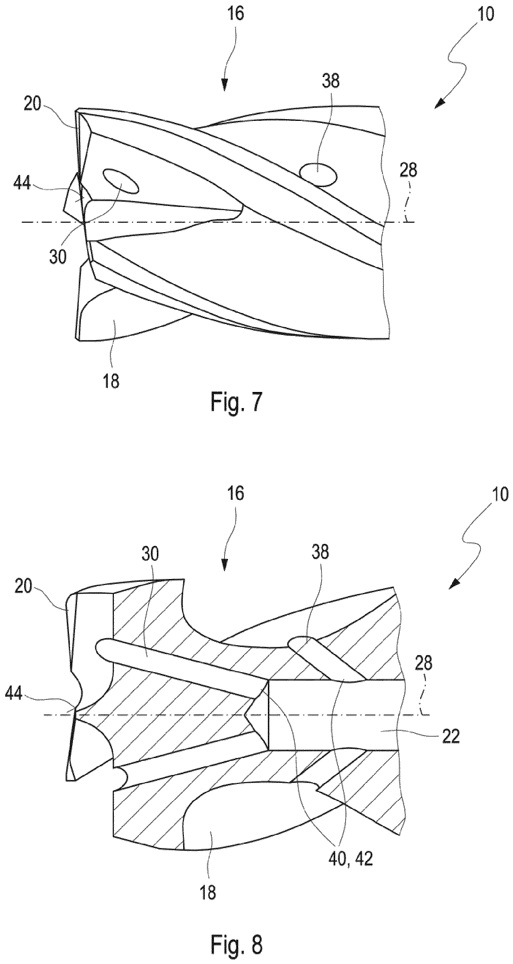

Fig. 7 zeigt eine perspektivische Darstellung eines Ausschnittes des Werkzeugkopfes 16 mit Kühlmittelaustrittsleitungen 30, 38 nach Fig. 6. Die Kühlmittelaustrittsleitungen 30, 38 sind im Bereich der Werkzeugkopfoberfläche 44 angebracht. Hierbei befindet sich im Spanbereich 18 an jeder Spankante 20 eine einzelne oder mehrfache Kühlmittelaustrittsleitung 30, 38. Die Kühlmittelaustrittsleitung 30, 38 kann den Windungen des Werkzeugkopfes 16 des Drehwerkzeugs 10 folgen. Durch die Kühlmittelaustrittsleitungen 30, 38 kann gezielt Schmier- und/oder Kühlfluid abgeführt werden und die Späne, welche bei der Bearbeitung eines Materials mit dem Drehwerkzeug 10 entstehen, abgeführt werden, sodass kein Verstopfen durch Späne des zu bearbeitenden Bohrloches oder ähnlichem entsteht.

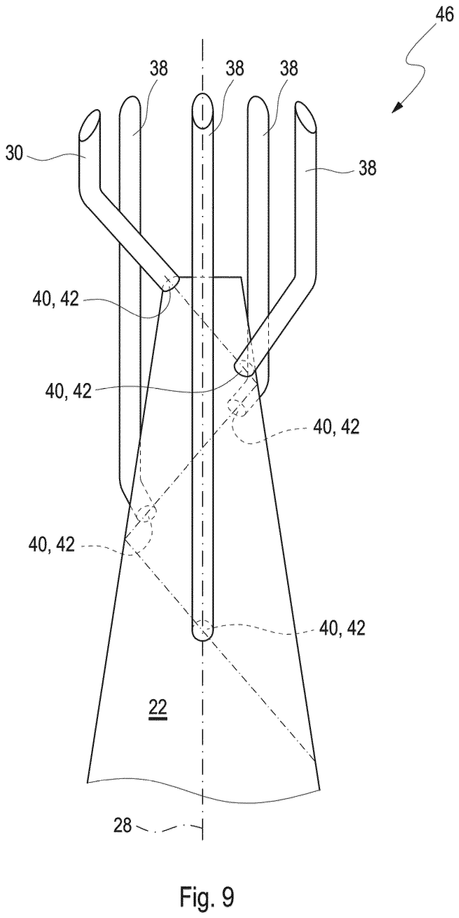

Einen Längsschnitt zu der Ansicht aus Fig. 7 zeigt Fig. 8. Der Kühlmittelkanal 22 mündet an den Kontaktstellen 40, 42 in die Kühlmittelaustrittsleitungen 30, 38. Die Kühlmittelaustrittsleitungen 30, 38 erstrecken sich bis zur Werkzeugkopfoberfläche 44 an der Spankante 20, wobei auch die versetzt angeordneten Kühlmittelaustrittsleitungen 38 in dieser Ausführungsform im Bereich des Spanbereichs verlaufen, jedoch seitlich am Werkzeugkopf enden und dort an die Oberfläche treten. Die Kühlmittelaustrittsleitungen 30 sind am werkzeugkopfseitigen Ende des Kühlmittelkanals 22 angeordnet. Die Kontaktstellen 40, 42 der Kühlmittelaustrittsleitungen 38 sind in dieser Ausführungsform in Umfangsrichtung des Kühlmittelkanals 22 in einer Ebene in Längsrichtung angeordnet. Weitere dieser versetzt angeordneter Kühlmittelaustrittsleitungen 38 sind auf weiteren Positionen in Längsrichtung des Kühlmittelkanals 22 möglich. Der Kühlmittelkanal 22 ist im Bereich der Kontaktstellen 40, 42 der Kühlmittelaustrittsleitungen 30, 38 verjüngt in Richtung des Werkzeugkopfes 16 ausgebildet. Ebenso können die Kontaktstellen 40, 42 der Kühlmittelaustrittsleitungen 30, 38 spiralförmig um den Kühlmittelkanal 22 angeordnet sein, gezeigt in Fig. 9.

Fig. 9 zeigt eine Darstellung des Kühlmittelkanals 22 mit Kühlmittelaustrittsleitungen 30, 38, deren Kontaktstellen 40, 42 spiralförmig um den Kühlmittelkanal 22 angeordnet sind. Die Darstellung zeigt das reine Kühlkanalsystem 46 ohne Ansicht des Drehwerkzeugs 10 bzw. des Werkzeugkopfes 16 und ohne Darstellung der Werkzeugkopfoberfläche 44. Der Kühlmittelkanal 22 ist konisch ausgebildet. In der dargestellten Ausführungsform weisen die Kühlmittelaustrittsleitungen 30, 38 einen Knick auf und verlaufen anschließend parallel zum Kühlmittelkanal 22 und damit parallel zur Rotationsachse 28. Die Kühlmittelaustrittsleitungen 30, 38 enden in einer Ebene an der Werkzeugkopfoberfläche 44 (nicht dargestellt). Im Gegensatz zu den Kühlmittelaustrittsleitungen 30, 38 aus beispielsweise Fig. 7 oder Fig. 8 werden demnach alle Kühlmittelaustrittleitungen 30, 38 bis an den Spanbereich 18 (nicht dargestellt) geführt. Die Kühlmittelkanalaustrittsleitung 30 ist am kürzesten und liegt am vorderen Ender des Kühlmittelkanals 22. Die weiteren Kühlmittelaustrittsleitungen 38 sind in Längsrichtung versetzt zu dieser Kühlmittelkanalaustrittsleitung 38 angeordnet. Durch die spiralförmige Anordnung der Kontaktstellen 40, 42 der Kühlmittelaustrittsleitungen 30, 38 auf dem Kühlmittelkanal 22 kann eine in Längsrichtung des Kühlmittelkanals 22 versetzt angeordnete Kühlmittelaustrittsleitung 30, 38 zwischen zwei weiter in Richtung Spanbereich 18 angeordneten Kühlmittelaustrittsleitungen 30, 38 liegen. Der Abstand und das Werkzeugmaterial zwischen den Kontaktstellen 40, 42 wird durch diese Anordnung maximiert, so dass eine hohe mechanische Stabilität und Standzeit des Werkzeugs erreicht werden kann.

Die Erfindung ermöglicht die Ausbildung der Kühlkanalverläufe durch ein Sinterverfahren, wobei komplexe Kanalverläufe durch Pressen, anstelle von Bohren herstellbar sind. Hierdurch wird der Herstellaufwand und -zeit deutlich verringert. Die Werkzeug-Rohlinge können mit einer Zentralbohrung im Trockenpressverfahren hergestellt werden. Die Zentralbohrung ist im Wesentlichen konisch ausgeformt. Eine Materialeinsparung des Vollhartmetalls von 5 bis 15%, in der Regel von zumindest 9% kann erreicht werden.

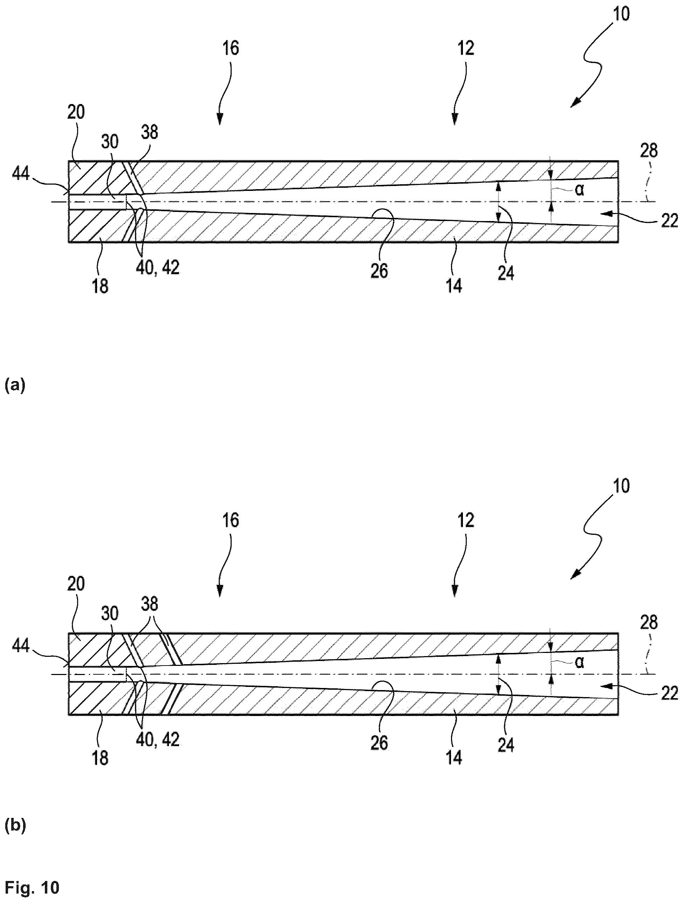

Die Figs. 10a und 10b zeigen jeweils eine schematische Darstellung eines Längsschnittes durch eine Ausführung eines erfindungsgemäßen Drehwerkzeugs 10 mit konischem Kühlmittelkanal 22. Ein Werkzeug mit einem derartigen Kühlmittelkanal und derartigen Kühlmittelaustrittsleitungen stellt einen Sacklochbohrer oder eine Sacklochreibahle dar. Der Kühlmittelkanal 22 verläuft vom Grundkörper 12 mit Einspannabschnitt 14 über den Werkzeugkopf 16 bis zum Spanbereich 18 konisch und zentrisch im Drehwerkzeug 10. Im Bereich des Spanbereichs 18 sind mehrere Kühlmittelaustrittsleitungen 30, 38 angeordnet, welche das Kühl- und/oder Schmierfluid durch den Kühlmittelkanal 22 bis zu den Spankanten 20 befördern. Die Kühlmittelaustrittsleitungen 30, 38 sind über Kontaktstellen 40, 42 mit dem Kühlmittelkanal 22 verbunden. Teilweise sind die Kühlmittelaustrittsleitungen 30, 38 in unterschiedlichen, in Längsrichtung des Kühlmittelkanals 22 versetzten Positionen 40, 42 angeordnet. Eine Kühlmittelaustrittsleitung 30 ist zentrisch angeordnet und verläuft vom Kühlmittelkanal 22 direkt zur Werkzeugkopfoberfläche 44, wobei diese Kühlmittelaustrittsleitung 30 zentrisch an der Werkzeugkopfoberfläche 44 hervortritt. Diese Kühlmittelaustrittsleitung 30 stellt eine Verlängerung des Kühlmittelkanals 22 dar und kann auch als Abschnitt des Kühlmittelkanals 22 gesehen werden. Im dargestellten schematischen Längsschnitt sind zwei weitere Kühlmittelaustrittsleitungen 38 in Längsrichtung versetzt sichtbar. Der Kühlmittelkanal 22 verläuft zentrisch zur Rotationsachse 28, wobei der Querschnitt 24 des Kühlmittelkanals 22 zum Werkzeugkopf 16 hin abnimmt. Die Abschnittsseitenwand 26 des Kühlmittelkanals 22 weist über die gesamte Länge des Kühlmittelkanals 22 einen konstanten Winkel α zur Rotationsachse 28 auf.

### Bezugszeichenliste

- 10: Drehwerkzeug
- 12: Grundkörper
- 14: Einspannabschnitt
- 16: Werkzeugkopf
- 18: Spanbereich
- 20: Spankante
- 22: Kühlmittelkanal
- 24: Querschnitt
- 26: Abschnittsseitenwand des Kühlmittelkanals
- 28: Rotationsachse
- 30: Kühlmittelaustrittsleitung
- 32: Kühlmittelkanal Abschnitt
- 34: Kühlmittelkanal Abschnitt 1
- 36: Kühlmittelkanal Abschnitt 2
- 38: versetzte Kühlmittelaustrittsleitung
- 40: Position der Kühlmittelaustrittsleitung auf dem Kühlkanal
- 42: Kontaktstelle Kühlmittelaustrittsleitung-Kühlkanal
- 44: Werkzeugkopfoberfläche
- 46: Kühlkanalsystem

## Patentansprüche

1. Drehwerkzeug (10) für eine spanende Bearbeitung von Werkstücken, umfassend einen Grundkörper (12) mit einen Einspannabschnitt (14) sowie einem Werkzeugkopf (16), der einen zumindest eine Spankante (20) aufweisenden Spanbereich (18) umfasst, wobei der Werkzeugkopf (16) zumindest einem Kühlmittelkanal (22) zur Zuführung eines Kühl- und/oder Schmierfluides in den Spanbereich (18) umfasst, **dadurch gekennzeichnet, dass** der Kühlmittelkanal (22) einen sich verjüngenden Querschnitt (24) in Richtung des Werkzeugkopfes (16) aufweist und in diesem Bereich zumindest zwei von Kontaktstellen (40, 42) des Kühlmittelkanals (22) in Richtung Werkzeugkopfoberfläche (44) abzweigende Kühlmittelaustrittsleitungen (30, 38) im Bereich des Werkzeugkopfes (16) angeordnet sind, wobei die mindestens zwei Kühlmittelaustrittsleitungen (30, 38) an in axialer Längsrichtung des Kühlmittelkanals (22) versetzten Positionen (40) angeordnet sind, wobei der Kühlmittelkanal (22) über die komplette Länge des Drehwerkzeugs (10) verjüngt ausgebildet ist.

2. Drehwerkzeug (10) nach Anspruch 1, **dadurch gekennzeichnet, dass** die Kühlmittelaustrittsleitungen (30, 38) in Umfangsrichtung des Kühlmittelkanals (22) versetzt angeordnet sind.

3. Drehwerkzeug (10) nach Anspruch 1 und 2, **dadurch gekennzeichnet, dass** die Kontaktstellen (40, 42) der Kühlmittelaustrittsleitungen (30, 38) mit dem Kühlmittelkanal (22) spiralartig um den Kühlmittelkanal (22) angeordnet sind.

4. Drehwerkzeug (10) nach einem der vorgenannten Ansprüche, **dadurch gekennzeichnet, dass** der Kühlmittelkanal (22) im Bereich des Grundkörpers (12) einen größeren Querschnitt (24) aufweist als im Bereich des Werkzeugkopfes (16).

5. Drehwerkzeug (10) nach einem der vorgenannten Ansprüche, **dadurch gekennzeichnet, dass** der Kühlmittelkanal (22) zumindest abschnittsweise konisch und/oder elliptisch und/oder parabolisch ausgebildet ist.

6. Drehwerkzeug (10) nach einem der vorgenannten Ansprüche, **dadurch gekennzeichnet, dass** der Kühlmittelkanal (22) zumindest zwei Abschnitte (32, 34, 36), insbesondere drei Abschnitte (32, 34, 36) umfasst, welche jeweils einen unterschiedlichen Neigungswinkel a1, a2 zwischen den Abschnittsseitenwänden (26) des Kühlmittelkanals (22) und der Rotationsachse (28) des Drehwerkzeugs (10) aufweisen.

7. Drehwerkzeug (10) nach einem der vorgenannten Ansprüche, **dadurch gekennzeichnet, dass** der Kühlmittelkanal (22) zentrisch im Grundkörper (12) verläuft.

8. Drehwerkzeug (10) nach einem der vorgenannten Ansprüche, **dadurch gekennzeichnet, dass** der Kühlmittelkanal (22) zentrisch im Werkzeugkopf (16) verläuft.

9. Drehwerkzeug (10) nach einem der vorgenannten Ansprüche, **dadurch gekennzeichnet, dass** die Anzahl der Kühlmittelaustrittsleitungen (30) der Anzahl der Spankanten (20) des Werkzeugkopfes (16) entspricht.

10. Verfahren zur Herstellung eines Drehwerkzeugs (10) nach einem der vorgenannten Ansprüche, **dadurch gekennzeichnet, dass** die Herstellung des Rohlings des Drehwerkzeugs (10) durch ein Sinterverfahren erfolgt, bei dem der Kühlmittelkanal (22) des Drehwerkzeugs (10) integral im Sinterverfahren mit ausgebildet wird.

11. Verfahren zur Herstellung eines Drehwerkzeugs (10) nach Anspruch 10, **dadurch gekennzeichnet, dass** bei der Herstellung des Rohlings die Kühlmittelaustrittsleitungen (30) des Drehwerkzeugs (10) integral im Sinterverfahren mit ausgebildet werden.

## Claims

1. Rotary tool (10) for a machining of workpieces, comprising a base body (12) having a clamping section (14) and a tool head (16) which comprises a cutting region (18) having at least one cutting edge (20), wherein the tool head (16) comprises at least one coolant channel (22) for supplying a cooling and/or lubricating fluid to the cutting region (18), **characterized in that** the coolant channel (22) has a cross-section (24) tapering in the direction of the tool head (16) and, in this region, at least two coolant outlet lines (30, 38) branching off from contact points (40, 42) of the coolant channel (22) in the direction of the tool head surface ( 44) are arranged in the area of the tool head (16), wherein the at least two coolant outlet lines (30, 38) are arranged at positions (40) offset in an axial longitudinal direction of the coolant channel (22), wherein the coolant channel (22) is tapered across the complete length of the rotary tool (10).

2. Rotary tool (10) according to claim 1, **characterized in that** the coolant outlet lines (30, 38) are arranged offset in the circumferential direction of the coolant channel (22).

3. Rotary tool (10) according to claim 1 and 2, **characterized in that** the contact points (40, 42) of the coolant outlet lines (30, 38) with the coolant channel (22) are arranged in a spiral pattern around the coolant channel (22).

4. Rotary tool (10) according to one of the aforementioned claims, **characterized in that** the coolant channel (22) has a larger cross-section (24) in the area of the base body (12) than in the area of the tool head (16).

5. Rotary tool (10) according to one of the aforementioned claims, **characterized in that** the coolant channel (22) is designed conically and/or elliptically and/or parabolically at least in sections.

6. Rotary tool (10) according to one of the aforementioned claims, **characterized in that** the coolant channel (22) comprises at least two sections (32, 34, 36), in particular three sections (32, 34, 36), each of which having a different angle of inclination a1, a2 between the section side walls (26) of the coolant channel (22) and the axis of rotation (28) of the rotary tool (10).

7. Rotary tool (10) according to one of the aforementioned claims, **characterised in that** the coolant channel (22) runs centrally within the base body (12).

8. Rotary tool (10) according to one of the aforementioned claims, **characterised in that** the coolant channel (22) runs centrally within the tool head (16).

9. Rotary tool (10) according to one of the aforementioned claims, **characterised in that** the number of coolant outlet lines (30) corresponds to the number of cutting edges (20) of the tool head (16).

10. Method for the production of a rotary tool (10) according to one of the aforementioned claims, **characterized in that** the blank of the rotary tool (10) is produced by a sintering process in which the coolant channel (22) of the rotary tool (10) is formed integrally in the sintering process.

11. Method for the production of a rotary tool (10) according to claim 10, **characterized in that** the coolant outlet lines (30) of the rotary tool (10) are formed integrally in the sintering process during the production of the blank.

## Revendications

1. Outil rotatif (10) pour un usinage de pièces à usiner, comprenant un corps de base (12) avec une section de serrage (14) et une tête d'outil (16) qui présente une zone de coupe (18) avec au moins une arête de coupe (20), la tête d'outil (16) présentant au moins un canal d'agent de refroidissement (22) pour l'amenée d'un fluide de refroidissement et/ou de lubrification à la zone de coupe (18), **caractérisé en ce que** le canal d'agent de refroidissement (22) présente une section transversale (24) se rétrécissant en direction de la tête d'outil (16), et dans cette zone, au moins deux conduites de sortie d'agent de refroidissement (30, 38) se ramifiant à partir de points de contact (40, 42) du canal d'agent de refroidissement (22) en direction de la surface de la tête d'outil (44) sont disposées dans la zone de la tête d'outil (16), les au moins deux conduites de sortie d'agent de refroidissement (30, 38) étant disposées à des positions (40) décalées dans une direction longitudinale axiale du canal d'agent de refroidissement (22), le canal d'agent de refroidissement (22) étant réalisé en forme effilé sur toute la longueur de l'outil rotatif (10).

2. Outil rotatif (10) selon la revendication 1, **caractérisé en ce que** les conduites de sortie d'agent de refroidissement (30, 38) sont disposées de manière décalée dans la direction circonférentielle du canal d'agent de refroidissement (22).

3. Outil rotatif (10) selon la revendication 1 et 2, **caractérisé en ce que** les points de contact (40, 42) des conduites de sortie d'agent de refroidissement (30, 38) avec le canal d'agent de refroidissement (22) sont disposés en spirale autour du canal d'agent de refroidissement (22).

4. Outil rotatif (10) selon l'une des revendications précédentes, **caractérisé en ce que** le canal d'agent de refroidissement (22) présente une section transversale (24) plus grande dans la zone du corps de base (12) que dans la zone de la tête d'outil (16).

5. Outil rotatif (10) selon l'une des revendications précédentes, **caractérisé en ce que** le canal d'agent de refroidissement (22) est conçu de manière conique et/ou elliptique et/ou parabolique au moins par sections.

6. Outil rotatif (10) selon l'une des revendications précédentes, **caractérisé en ce que** le canal d'agent de refroidissement (22) comprend au moins deux sections (32, 34, 36), en particulier trois sections (32, 34, 36), qui présentent chacune un angle d'inclinaison a1, a2 différent entre les parois latérales de section (26) du canal d'agent de refroidissement (22) et l'axe de rotation (28) de l'outil rotatif (10).

7. Outil rotatif (10) selon l'une des revendications précédentes, **caractérisé en ce que** le canal d'agent de refroidissement (22) s'étend de manière centrale à l'intérieur du corps de base (12).

8. Outil rotatif (10) selon l'une des revendications précédentes, **caractérisé en ce que** le canal d'agent de refroidissement (22) s'étend de manière centrale à l'intérieur de la tête d'outil (16).

9. Outil rotatif (10) selon l'une des revendications précédentes, **caractérisé en ce que** le nombre de conduites de sortie d'agent de refroidissement (30) correspond au nombre d'arêtes de coupe (20) de la tête d'outil (16).

10. Procédé de fabrication d'un outil rotatif (10) selon l'une des revendications précédentes, **caractérisé en ce que** l'ébauche de l'outil rotatif (10) est fabriquée par un procédé de frittage dans lequel le canal d'agent de refroidissement (22) de l'outil rotatif (10) est formé intégralement dans le procédé de frittage.

11. Procédé de fabrication d'un outil rotatif (10) selon la revendication 10, **caractérisé en ce que** les conduites de sortie d'agent de refroidissement (30) de l'outil rotatif (10) sont formées intégralement dans le procédé de frittage pendant la fabrication de l'ébauche.
